# EUROPEAN PATENT APPLICATION

(11) **EP 4 654 744 A1**
(43) Date of publication of application: **26.11.2025**
(21) Application number: 23916707.5
(22) Date of filing: 17.01.2023
(51) Int. Cl.: H04W 88/04

(54) **RADIO FRAME TRANSMISSION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2023/072738
(87) International publication number: WO 2024/152217

(57) **Abstract**

Embodiments of the present disclosure relate to the technical field of mobile communications, and provide a radio frame transmission method, an electronic device, and a storage medium. The radio frame transmission method is applied to a relay end. The method comprises: receiving a first radio frame of a transmitting end under a first link; and in response to the first radio frame, transmitting a second radio frame to a receiving end under a second link, wherein the first radio frame and/or the second radio frame request transmission of a relay data frame, or the first radio frame and/or the second radio frame comprise the relay data frame. The embodiments of the present disclosure provide an implementation mode of data relay.

## Description

### TECHNICAL FIELD

The present disclosure relates to a field of mobile communication technologies. Specifically, the present disclosure relates to a method for transmitting a radio frame, an electronic device and a storage medium.

### BACKGROUND

With the rapid development of mobile communication technologies, wireless fidelity (Wi-Fi) technology has made significant progress in terms of transmission rate and throughput, etc. Currently, research content of the Wi-Fi technology, such as ultra high reliability (UHR), aims to enhance reliability of wireless local area network (WLAN) connectivity, reduce latencies, improve manageability, increase throughput at different signal to noise ratio (SNR) levels and reduce device-level power consumption. Moreover, in the UHR, to increase the system's throughput, a method of simultaneously communicating in the frequency bands of sub7GHz (gigahertz) and 45GHz, and/or 60GHz has been proposed.

**In** the UHR, the low latency service transmission mechanism will be further enhanced and supports multi-link scenarios. To increase the throughput at different SNR levels, data relay may be adopted to transmit a data frame in the UHR. Therefore, an implementation method for data relay needs to be provided to meet transmission requirements of the UHR.

### SUMMARY

The embodiments of the present disclosure provide a method for transmitting a radio frame, an electronic device and a storage medium, aiming to provide an implementation method for data relay.

**In** a first aspect, the embodiments of the present disclosure provide a method for transmitting a radio frame. The method is performed by a relay, and includes:
receiving a first radio frame from a transmitter in a first link;
sending a second radio frame to a receiver in a second link in response to the first radio frame;
in which the first radio frame and/or the second radio frame requests to send a relay data frame, or the first radio frame and/or the second radio frame includes the relay data frame.

In another aspect, the embodiments of the present disclosure provide a method for transmitting a radio frame. The method is performed by a transmitter, and includes:
sending a first radio frame to a relay in a first link to instruct the relay to send a second radio frame to a receiver in a second link;
in which the first radio frame and/or the second radio frame requests to send a relay data frame, or the first radio frame and/or the second radio frame includes the relay data frame.

In another aspect, the embodiments of the present disclosure provide a method for transmitting a radio frame. The method is performed by a receiver, and includes:
receiving a second radio frame sent by a relay in a second link; in which the second radio frame is sent by the relay in response to receiving a first radio frame in a first link;
in which the first radio frame and/or the second radio frame requests to send a relay data frame, or the first radio frame and/or the second radio frame includes the relay data frame.

In another aspect, the embodiments of the present disclosure provide an electronic device. The electronic device is a relay, and includes:
a first receiving module, configured to receive a first radio frame from a transmitter in a first link;
a first sending module, configured to send a second radio frame to a receiver in a second link in response to the first radio frame;
in which the first radio frame and/or the second radio frame requests to send a relay data frame, or the first radio frame and/or the second radio frame includes the relay data frame.

In another aspect, the embodiments of the present disclosure provide an electronic device. The electronic device is a transmitter, and includes:
a second sending module, configured to send a first radio frame to a relay in a first link to instruct the relay to send a second radio frame to a receiver in a second link;
in which the first radio frame and/or the second radio frame requests to send a relay data frame, or the first radio frame and/or the second radio frame includes the relay data frame.

In another aspect, the embodiments of the present disclosure provide an electronic device. The electronic device is a receiver, and includes:
a second receiving module, configured to receive a second radio frame sent by a relay in a second link; in which the second radio frame is sent by the relay in response to receiving a first radio frame in a first link;
in which the first radio frame and/or the second radio frame requests to send a relay data frame, or the first radio frame and/or the second radio frame includes the relay data frame.

The embodiments of the present disclosure further provide an electronic device, including a memory, a processor, and a computer program stored on the memory and runnable on the processor, in which the processor executes the computer program to perform the method according to one or more embodiments of the present disclosure.

The embodiments of the present disclosure further provide a computer-readable storage medium, in which a computer program is stored on the computer-readable storage medium, and when the computer program is executed by a processor, the method according to one or more embodiments of the present disclosure is implemented.

In the embodiments of the present disclosure, in a case that a relay station (STA) receives the first radio frame from the transmitter in the first link, the STA sends the second radio frame to the receiver in the second link, so that no contention access channel is required for transmitting the relay data frame, thereby avoiding potential conflicts that may arise from the contention access channel, and further reducing transmission delay. The embodiments of the present disclosure provide an implementation method for data relay to meet the transmission requirements for UHR.

The additional aspects and advantages of the embodiments of the present disclosure will be described in the following description section. These will become apparent from the description below, or may be understood through the practice of the present disclosure.

### BRIEF DESCRIPTION OF THE DRAWINGS

In order to explain technical solutions in the embodiments of the present disclosure more clearly, the drawings described in the embodiments of the disclosure will be briefly introduced below. Obviously, the drawings described below are merely some embodiments of the disclosure. For ordinary technicians in the field, without the need for creative efforts, other drawings may be obtained based on these drawings.
FIG. 1 is a flowchart illustrating a method for transmitting a radio frame provided in embodiments of the present disclosure;
FIG. 2 is a schematic diagram of a first example in embodiments of the present disclosure;
FIG. 3 is another schematic diagram of the first example in embodiments of the present disclosure;
FIG. 4 is another schematic diagram of the first example in embodiments of the present disclosure;
FIG. 5 is a schematic diagram of a second example in embodiments of the present disclosure;
FIG. 6 is another flowchart illustrating a method for transmitting a radio frame provided in embodiments of the present disclosure;
FIG. 7 is another flowchart illustrating a method for transmitting a radio frame provided in embodiments of the present disclosure;
FIG. 8 is a block diagram illustrating an electronic device provided in embodiments of the present disclosure;
FIG. 9 is another block diagram illustrating an electronic device provided in embodiments of the present disclosure;
FIG. 10 is another block diagram illustrating an electronic device provided in embodiments of the present disclosure;
FIG. 11 is another block diagram illustrating an electronic device provided in embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiment of the present disclosure are merely for the purpose of describing a particular embodiment and are not intended to limit the embodiment of the present disclosure. The terms "a" and "the" in the singular form as used in the embodiment of the present disclosure and the accompanying claims are also intended to include the majority form, unless the context clearly indicates otherwise. It should also be understood that the term "and/or" as used herein refers to and encompasses any or all possible combinations of one or more associated listed items. For example, "A and/or B" may represent three situations: A exists alone, A and B exist simultaneously, or B exists alone. The character "/" generally indicates that the objects before and after it have a "or" relationship. The term "multiple" means two or more. Given this, in the embodiments of the present disclosure, "multiple" may also be understood as "at least two".

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if' used here can be interpreted as "in... when" or "in response to determining".

In conjunction with the drawings in the embodiments of the present disclosure, the technical solutions in the embodiments of the present disclosure will be clearly and completely described below. Obviously, the described embodiments are only some embodiments of the present disclosure, but not all the embodiments. Based on the embodiments of the present disclosure, all other embodiments obtained by ordinary technicians in the field without making creative efforts fall within the protection scope of this disclosure.

The embodiments of the present disclosure provide a method for transmitting a radio frame, an electronic device and a storage medium, aiming to provide an implementation method for data relay.

The method and the apparatus are based on the same application concept. Since the principles of solving problems are similar for the method and the apparatus, the implementation of the apparatus and the method may be referred to each other. The repetitive parts will not be elaborated again.

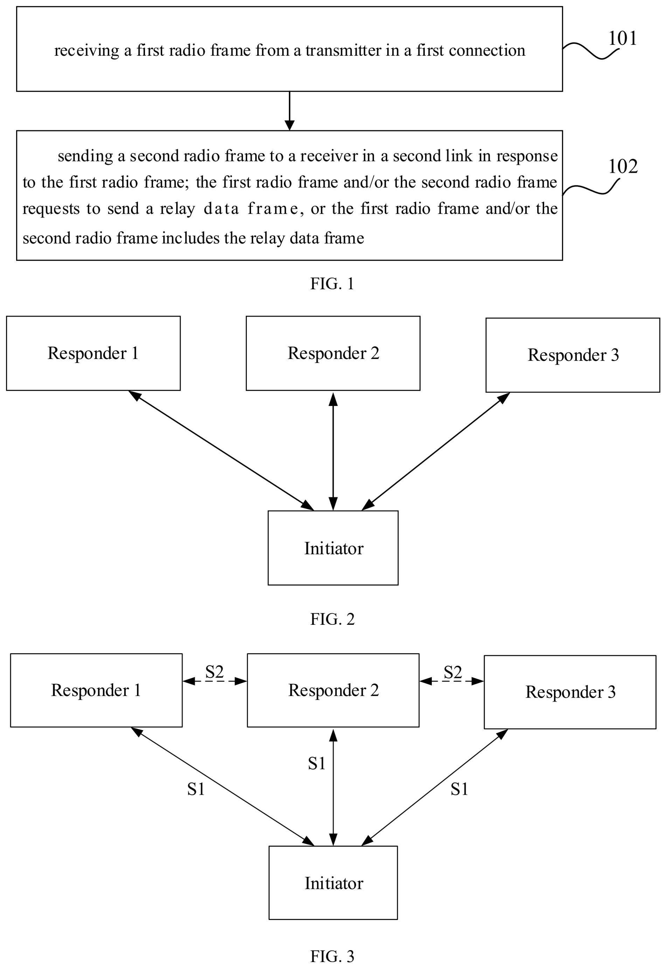

As shown in FIG. 1, an embodiment of the present disclosure provides a method for transmitting a radio frame. Optionally, this method may be performed by a relay, in which the relay may be an access point (AP) device or a station (STA) device; optionally, in the embodiment of the present disclosure, the AP, for example, is a device with wireless-to-wired bridging function, which is responsible for extending a service provided by a wired network to a wireless network; the STA, for example, is an electronic device with wireless network access function, providing a frame delivery service to enable information transmission.

In a wireless local area network, a basic service set (BSS) may be composed of an AP and one or more STAs that communicate with the AP. The BSS may be connected to a distribution system (DS) through its AP, and then access to another BSS to form an extended service set (ESS). As a first example, refer to FIG. 2, AP1 and STA1 form BSS1, and AP2 and STA2 form BSS2. In a case that the coverage areas of two or more BSSs overlap, an overlapping basic service set (OBSS) is formed. As shown in FIG. 2, BSS1 and BSS2 overlap to form an OBSS.

Optionally, in embodiments of the present disclosure, the AP and the STA may be devices that support multi-link. For example, the AP and the STA may be respectively represented as AP MLD and non-AP MLD. The AP MLD may represent an access point that supports multi-link communication function, and the non-AP MLD may represent a station that supports the multi-link communication function.

Refer to FIG. 3, the AP MLD may consist of three subordinate APs, namely AP1, AP2 and AP3 as shown in FIG. 3. Each AP may operate on links 1, 2 and 3, respectively. The non-AP MLD may also include three subordinate STAs, such as STA1, STA2 and STA3 as shown in FIG. 2. The STA1 operates on link 1, the STA2 operates on link 2 and the STA3 operates on link 3.

For ease of description, in the following text, an example of communication between one AP and one STA in a multi-link scenario is described. However, the embodiments of the present disclosure are not limited thereto. In the example shown in FIG. 3, it is assumed that the AP1 communicates with the STA1 through a corresponding first link Link 1, similarly, the AP2 communicates with the STA2 through a corresponding second link Link 2, and the AP communicates with STA3 through a third link Link 3. Moreover, Link 1 to Link 3 may be multiple links at different frequencies, such as links at 2.4GHz, 5GHz, 6GHz, or several links of the same or different bandwidths at 2.4GHz. Additionally, there may be multiple channels in each link. It is understood that the communication scenario shown in FIG. 2 is merely exemplary, and the disclosure concept is not limited thereto. For example, the AP MLD may be connected to multiple (for example, three) non-AP MLDs, or in each link, the AP may communicate with multiple other types of stations.

The method may include the following steps.

Step 101, a first radio frame is received from a transmitter in a first link.

Step 102, a second radio frame is sent to a receiver in a second link in response to the first radio frame.

The first radio frame and/or the second radio frame requests to send a relay data frame, or the first radio frame and/or the second radio frame includes the relay data frame.

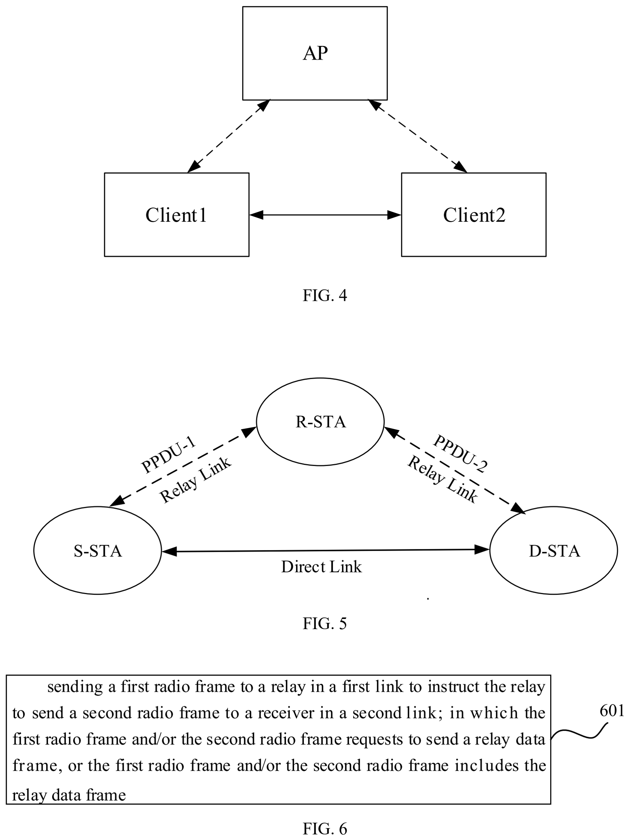

In UHR, the data frame may be transmitted using the way of data relay. As a second example, refer to FIG. 5, during data relay transmission, a transmitter (hereinafter also called a source STA, S-STA) transmits the relay data frame (such as PPDU-1) to a relay (hereinafter also called a relay STA, R-STA) through a relay link. After the relay fills the relay data frame with a necessary address, the relay forwards the relay data frame (such as PPDU-2) to a receiver (hereinafter also called a destination STA, D-STA). In addition, the transmitter may also transmit the data frame to the receiver through a direct link. In the embodiments of the present disclosure, the relay may also be an AP. For the sake of clarity, in the following description, the STA is used as the relay, which does not limit the embodiments of the present disclosure.

In the embodiment of the present disclosure, after receiving a first radio frame sent by the source STA in a first link, the relay STA sends a second radio frame to the receiver in a second link. That is to say, after receiving the first radio frame, the relay STA sends the second radio frame in another link. Here, the first radio frame and the second radio frame may be respectively the transmitted relay data frames (such as relay PPDU), for example, the PPDU in FIG. 5, or may be radio frames used to request transmission of the relay data frame, such as a request to send (RTS) frame.

Specifically, taking the case where both the first radio frame and the second radio frame are RTS frames as an example, the source STA sends a first RTS frame (i.e., the first radio frame) to the relay STA in the first link so as to request transmission of the relay data frame to the relay STA. After the Relay STA receives the first RTS frame in the first link, the Relay STA simultaneously sends a second RTS frame (i.e., the second radio frame) in another link (i.e., the second link). Thus, when the relay STA receives the data frame sent by the source STA, the relay STA transmits the relay data frame in another link, so that no contention access channel is required for transmitting the relay data frame, thereby avoiding potential conflicts that may arise from the contention access channel and cause transmission delay.

Similarly, in a case that both the first radio frame and the second radio frame are relay data frames, when the relay STA receives the relay data frame sent by the source STA, the relay STA transmits the relay data frame in another link without requiring a contention access channel for transmitting the relay data frame.

In the embodiment of the present disclosure, in a case that a relay STA receives the first radio frame from the transmitter in the first link, the relay STA sends the second radio frame to the receiver in the second link without requiring a contention access channel for transmitting the relay data frame, thereby avoiding potential conflicts that may arise from the contention access channel and cause transmission delay. The embodiments of the present disclosure provide an implementation method for data relay to meet the transmission requirements for UHR.

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

A second radio frame is sent to a receiver in a second link in response to the first radio frame.

The first radio frame and/or the second radio frame requests to send a relay data frame, in which the first radio frame includes the first RTS frame and the second radio frame includes a second RTS frame.

Before transmitting the relay data frame (such as relay PPDU), a source STA sends the first RTS frame (i.e., the first radio frame) to a relay STA in the first link so as to request transmission of the relay data frame to the relay STA. After the relay STA receives the first RTS frame in the first link, the relay STA simultaneously sends the second RTS frame (i.e., the second radio frame) in another link (i.e., the second link). Thus, when the relay STA receives the data frame sent by the source STA, the relay STA transmits the relay data frame in another link without requiring a contention access channel for transmitting the relay data frame, thereby avoiding potential conflicts that may arise from the contention access channel and cause transmission delay.

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

In response to the first radio frame, a clear to send (CTS) frame is sent to the transmitter in the first link and a second radio frame is sent to a receiver in a second link.

The first radio frame and/or the second radio frame requests to send a relay data frame, in which the first radio frame includes the first RTS frame and the second radio frame includes a second RTS frame.

Before transmitting the relay data frame, a source STA sends the first RTS frame to a relay STA in the first link. In the first link, after receiving the first RTS frame, the relay STA simultaneously sends the CTS frame to the transmitter in the first link and sends the second RTS frame in another link.

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

In response to the first radio frame, a clear to send (CTS) frame is sent to the transmitter in the first link and a second radio frame is sent to a receiver in a second link.

The first radio frame and/or the second radio frame requests to send a relay data frame, in which the first radio frame includes the first RTS frame and the second radio frame includes a second RTS frame.

The first RTS frame and/or the second RTS frame includes duration information;

As a third example, the frame format of the first RTS frame and/or the second RTS frame is as shown in Table 1 below:

**Table 1:**

| Information Content | Frame Control | Duration | RA (Receiver address) | TA (Transmitter address) | FCS (Frame Check Sequence) |
|---|---|---|---|---|---|
| Octets | 2 | 2 | 6 | 6 | 4 |

The duration information includes the sum of a transmission duration of the relay data frame, a duration of a short interframe space (SIFS), and a duration of an acknowledge character or block ACK (ACK/BA), that is, the duration in the duration information is the sum of the duration of the relay PPDU, the duration of the SIFS and the duration of the ACK/BA.

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

In response to the first radio frame, a clear to send (CTS) frame is sent to the transmitter in the first link and a second radio frame is sent to a receiver in a second link.

The first radio frame and/or the second radio frame requests to send a relay the duration of, in which the first radio frame includes the first RTS frame and the second radio frame includes a second RTS frame.

The first RTS frame includes source address (SA) information of the transmitter and destination address (DA) information of the receiver, so that the relay STA may learn the source address information and the destination address information of the relay PPDU to be transmitted. As a fourth example, the frame format of the first RTS frame is as shown in Table 2 below:

**Table 2:**

| Information Content | Frame Control | Duration | SA (Source Address) | DA (Destination Address) | RA (Receiver address) | TA (Transmitter address) | FCS (Frame Check Sequence) |
|---|---|---|---|---|---|---|---|
| Octets | 2 | 2 | 6 | 6 | 6 | 6 | 4 |

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

In response to the first radio frame, a clear to send (CTS) frame is sent to the transmitter in the first link and a second radio frame is sent to a receiver in a second link.

The first radio frame and/or the second radio frame requests to send a relay data frame, in which the first radio frame includes the first RTS frame and the second radio frame includes a second RTS frame.

The first RTS frame includes source address (SA) information of the transmitter and destination address (DA) information of the receiver, which enable the relay STA to learn the source address information and the destination address information of the relay PPDU to be transmitted.

In a case that the transmitter (or the receiver) supports multi-link communication, the corresponding address information includes medium access control (MAC) layer address information of a multi-link device attached to the transmitter; for example, the transmitter supports the multi-link communication, and the SA information includes the MAC layer address information of a multi-link device corresponding to the transmitter;
and/or,
the receiver supports the multi-link communication, and the DA information includes MAC layer address information of a multi-link device corresponding to the receiver.

An embodiment of the present disclosure provides a method for transmitting a radio frame. Optionally, the method may be performed by a relay, and the method may include the following steps.

A first radio frame is received from a transmitter in a first link, in which the first radio frame includes a first request to send (RTS) frame.

In response to the first radio frame, a second radio frame is sent to a receiver in a second link.

The first radio frame and/or the second radio frame requests to send a relay data frame, in which the first radio frame includes the first RTS frame and the second radio frame includes a second RTS frame. Refer to Table 1 mentioned before, the second RTS frame includes: receiver address (RA) information of the receiver in the second link, and transmitter address (TA) information of the transmitter in the second link. The RA and TA are used as the MAC addresses of the destination STA and the relay STA respectively in the second link.

Optionally, in the embodiments of the present disclosure, the first link and the second link form a simultaneous transmitting and receiving (STR) link pair with each other.

In a multi-link (or multi-link) scenario, a single physical device may typically include a plurality of logical devices. Each logical device may independently manage data transmission and reception, and each logical device operates independently on a link. In a case that the multi-link device is equipped with high-performance transceivers having strong anti-interference capabilities for data transmission and reception among multiple links, when data is sent on one link, data may also be received on other links, and the data transmission and reception on two links do not affect each other. These links are called a simultaneous transmitting and receiving (STR) link pair. By transmitting data based on the STR link pair, the transmission delay may be effectively reduced.

An embodiment of the present disclosure provides a method for transmitting a radio frame. Optionally, the method may be performed by a relay, and the method may include the following steps.

A first radio frame is received from a transmitter in a first link.

A second radio frame is sent to a receiver in a second link in response to the first radio frame.

The first radio frame and/or the second radio frame requests to send a relay data frame, or the first radio frame and/or the second radio frame includes the relay data frame.

Optionally, the first radio frame includes a first RTS frame and the second radio frame includes a second RTS frame.

Optionally, after receiving the first radio frame from the transmitter in the first link, the method further includes:
sending a clear to send (CTS) frame to the transmitter in the first link.

Optionally, the first RTS frame and/or the second RTS frame includes duration information.

The duration information includes the sum of a transmission duration of the relay data frame, a duration of a short interframe space (SIFS), and a duration of an acknowledge character or block ACK (ACK/BA).

Optionally, the first RTS frame includes source address (SA) information of the transmitter and destination address (DA) information of the receiver.

Optionally, the transmitter supports multi-link communication, and the SA information includes medium access control (MAC) layer address information of a multi-link device corresponding to the transmitter;
and/or,
the receiver supports multi-link communication, and the DA information comprises MAC layer address information of a multi-link device corresponding to the receiver.

Optionally, the second RTS frame includes: receiver address (RA) information of the receiver in the second link, and transmitter address (TA) information of the transmitter in the second link.

Optionally, the first link and the second link form a simultaneous transmitting and receiving (STR) link pair with each other.

In the embodiments of the present disclosure, in a case that a relay station (STA) receives the first radio frame from the transmitter in the first link, the relay STA sends the second radio frame to the receiver in the second link without requiring a contention access channel for transmitting the relay PPDU, thereby avoiding potential conflicts that may arise from the contention access channel and may cause transmission delay. The embodiments of the present disclosure provide an implementation method for data relay to meet the transmission requirements for UHR.

Refer to FIG. 6, an embodiment of the present disclosure provides a method for transmitting a radio frame. Optionally, the method may be performed by a transmitter, and the transmitter may be a station (STA).

The method may include the following steps.

Step 601, a first radio frame is sent to a relay in a first link to instruct the relay to send a second radio frame to a receiver in a second link.

The first radio frame and/or the second radio frame requests to send a relay data frame, or the first radio frame and/or the second radio frame includes the relay data frame.

Regarding the WLAN architecture to which the method for transmitting a radio frame provided in the embodiments of the present disclosure is applied, reference may be made to the aforementioned first example, which will not be elaborated further here.

In UHR, the data frame may be transmitted using the way of data relay. As a second example, refer to FIG. 5, during data relay transmission, a transmitter (also called a source STA, S-STA) transmits the relay data frame (such as PPDU-1) to a relay (also called a relay STA, R-STA) through a relay link. After the relay fills the relay data frame with a necessary address, the relay forwards the relay data frame (such as PPDU-2) to the receiver (also called a destination STA, D-STA). In addition, the transmitter may also transmit the data frame to the receiver through a direct link. In the embodiments of the present disclosure, the relay may also be an AP. For the sake of clarity, in the following description, the STA is used as the relay, which does not limit the embodiments of the present disclosure.

In the embodiments of the present disclosure, the source STA sends a first radio frame to the relay STA in a first link to instruct the relay STA to send a second radio frame to a receiver in a second link. That is to say, after receiving the first radio frame, the relay STA sends the second radio frame in another link. Here, the first radio frame and the second radio frame may be respectively the transmitted relay data frames (such as relay PPDU), for example, the PPDU in FIG. 5, or may be radio frames used to request transmission of the relay data frame, such as a request to send (RTS) frame.

Specifically, taking the case where both the first radio frame and the second radio frame are RTS frames as an example, the source STA sends a first RTS frame (i.e., the first radio frame) to the relay STA in the first link so as to request the transmission of the relay data frame to the relay STA. After the relay STA receives the first RTS frame in the first link, the relay STA simultaneously sends a second RTS frame (i.e., the second radio frame) in another link (i.e., the second link). Thus, when the relay STA receives the data frame sent by the source STA, the relay STA transmits the relay data frame in another link without requiring a contention access channel for transmitting the relay data frame, thereby avoiding potential conflicts that may arise from the contention access channel and may cause transmission delay.

Similarly, in a case that both the first radio frame and the second radio frame are relay data frames, when the relay STA receives the relay data frame sent by the source STA, the relay STA transmits the relay data frame in another link without requiring a contention access channel for transmitting the relay data frame.

In the embodiment of the present disclosure, the source STA sends a first radio frame to a relay in a first link to instruct the relay to send a second radio frame to a receiver in a second link, so that there is no need for the relay STA to transmit the relay data frame based on the contention access channel, thereby avoiding potential conflicts that may arise from the contention access channel and may cause transmission delay. The embodiments of the present disclosure provide an implementation method for data relay to meet the transmission requirements for UHR.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame. Before transmitting the relay data frame, a source STA sends the first RTS frame to a relay STA in the first link. In the first link, after receiving the first RTS frame, the relay STA simultaneously sends a CTS frame to the transmitter in the first link and sends the second RTS frame in another link.

An embodiment of the present disclosure provides a method for transmitting a radio frame. Optionally, the method may be performed by a transmitter, and the method may include the following steps.

A first radio frame is sent to a relay in a first link, a clear to send (CTS) frame sent by the relay is received in the first link and the relay is instructed to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame.

Before transmitting the relay data frame, a source STA sends the first RTS frame to a relay STA in the first link. In the first link, after receiving the first RTS frame, the relay STA simultaneously sends the CTS frame to the transmitter in the first link and sends the second RTS frame in another link.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame.

Referring to Table 1 mentioned earlier, the first RTS frame and/or the second RTS frame includes duration information. The duration information includes the sum of a transmission duration of the relay data frame, a duration of a short interframe space (SIFS), and a duration of an acknowledge character or block ACK (ACK/BA), that is, the duration in the duration information is the sum of the duration of the relay PPDU, the duration of the SIFS and the duration of the ACK/BA.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame. Referring to Table 2 mentioned earlier, the first RTS frame includes source address (SA) information of the transmitter and destination address (DA) information of the receiver, which enable the relay STA to learn the source address information and the destination address information of the relay PPDU to be transmitted.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame. The first RTS frame includes source address (SA) information of the transmitter and destination address (DA) information of the receiver.

In a case that the transmitter (or the receiver) supports multi-link communication, the corresponding address information includes medium access control (MAC) layer address information of a multi-link device attached to the transmitter; for example, the transmitter supports the multi-link communication, and the SA information includes the MAC layer address information of a multi-link device corresponding to the transmitter;
and/or,
the receiver supports the multi-link communication, and the DA information includes MAC layer address information of a multi-link device corresponding to the receiver.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame.

Referring to Table 1 mentioned earlier, the second RTS frame includes: receiver address (RA) information of the receiver in the second link, and transmitter address (TA) information of the transmitter in the second link. The RA and TA are the MAC addresses of the destination STA and the relay STA respectively in the second link.

Optionally, in the embodiments of the present disclosure, the first link and the second link form a simultaneous transmitting and receiving (STR) link pair with each other.

In a multi-link (or multi-link) scenario, a single physical device may typically include a plurality of logical devices. Each logical device may independently manage data transmission and reception, and each logical device operates independently on a link. In a case that the multi-link device is equipped with high-performance transceivers having strong anti-interference capabilities for the data transmission and reception among multiple links, when data is sent on one link, data may also be received on other links, and the data transmission and reception on two links do not affect each other. These links are called a simultaneous transmitting and receiving (STR) link pair. By transmitting data based on the STR link pair, the transmission delay may be effectively reduced.

An embodiment of the present disclosure provides a method for transmitting a radio frame. Optionally, the method may be performed by a transmitter, and the method may include the following steps.

A first radio frame is sent to a relay in a first link to instruct the relay to send a second radio frame to a receiver in a second link; in which the first radio frame and/or the second radio frame requests to send a relay data frame, or the first radio frame and/or the second radio frame includes the relay data frame.

The first radio frame includes a first request to send (RTS) frame, and the second radio frame includes a second RTS frame.

Optionally, after sending the first radio frame to the relay in the first link, the method further includes:
receiving a clear to send (CTS) frame sent by the relay in the first link.

Optionally, the first RTS frame and/or the second RTS frame includes duration information.

The duration information includes the sum of a transmission duration of the relay PPDU, a duration of a short interframe space (SIFS), and a duration of an acknowledge character or block ACK (ACK/BA).

Optionally, the first RTS frame includes source address (SA) information of the transmitter and destination address (DA) information of the receiver.

Optionally, the transmitter supports multi-link communication, and the SA information includes medium access control (MAC) layer address information of a multi-link device corresponding to the transmitter;
and/or,
the receiver supports multi-link communication, and the DA information comprises MAC layer address information of a multi-link device corresponding to the receiver.

Optionally, the second RTS frame includes: receiver address (RA) information of the receiver in the second link, and transmitter address (TA) information of the transmitter in the second link.

Optionally, the first link and the second link form a simultaneous transmitting and receiving (STR) link pair with each other.

In the embodiment of the present disclosure, the source STA sends a first radio frame to a relay STA in a first link to instruct the relay STA to send a second radio frame to a receiver in a second link, so that there is no need for the relay STA to transmit the relay data frame based on a contention access channel, thereby avoiding potential conflicts that may arise from the contention access channel and may cause transmission delay. The embodiments of the present disclosure provide an implementation method for data relay to meet the transmission requirements for UHR.

An embodiment of the present disclosure provides a method for transmitting a radio frame, applied to a radio transmission system. The radio transmission system includes a transmitter, a relay and a receiver. As an example, referring to FIG. 5, the transmitter (also called a source STA, S-STA) sends the first radio frame to the relay (also called a relay STA, R-STA) in the first link (for example, the relay link in FIG. 5). The first radio frame is used to request to send a relay data frame, or the first radio frame includes the relay data frame.

After receiving the first radio frame in the first link, the relay sends a second radio frame to the receiver (also called a destination STA, D-STA) in a second link with the receiver. The second radio frame is used to request to send a relay data frame, or the second radio frame includes the relay data frame.

In this way, in a case that the relay receives the first radio frame from the transmitter in the first link, the relay sends the second radio frame to the receiver in the second link without requiring a contention access channel for transmitting the relay data frame, thereby avoiding potential conflicts that may arise from the contention access channel and may cause transmission delay.

Optionally, the first radio frame includes a first RTS frame and the second radio frame includes a second RTS frame.

Optionally, after receiving the first radio frame from the transmitter in the first link, the relay sends a clear to send (CTS) frame to the transmitter in the first link.

Optionally, the first RTS frame and/or the second RTS frame includes duration information.

The duration information includes the sum of a transmission duration of the relay PPDU, a duration of a short interframe space (SIFS), and a duration of an acknowledge character or block ACK (ACK/BA).

Optionally, the first RTS frame includes source address (SA) information of the transmitter and destination address (DA) information of the receiver.

Optionally, the transmitter supports multi-link communication, and the SA information includes medium access control (MAC) layer address information of a multi-link device corresponding to the transmitter;
and/or,
the receiver supports multi-link communication, and the DA information comprises MAC layer address information of a multi-link device corresponding to the receiver.

Optionally, the second RTS frame includes: receiver address (RA) information of the receiver in the second link, and transmitter address (TA) information of the transmitter in the second link.

Optionally, the first link and the second link form a simultaneous transmitting and receiving (STR) link pair with each other.

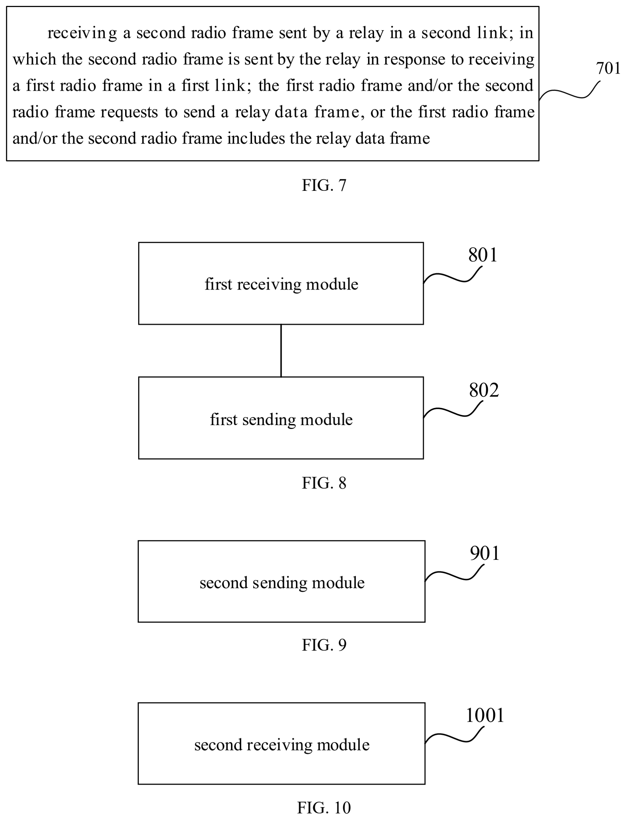

Refer to FIG. 7, an embodiment of the present disclosure provides a method for transmitting a radio frame. Optionally, the method may be performed by a receiver, and the receiver may be a station (STA).

The method may include the following steps.

Step 701, a second radio frame sent by a relay is received in a second link; in which the second radio frame is sent by the relay in response to receiving a first radio frame in a first link.

The first radio frame and/or the second radio frame requests to send a relay data frame, or the first radio frame and/or the second radio frame includes the relay data frame.

Regarding the WLAN architecture to which the method for transmitting a radio frame provided in the embodiment of the present disclosure is applied, reference may be made to the aforementioned first example, which will not be elaborated further here.

In UHR, the data frame may be transmitted using the way of data relay. As a second example, refer to FIG. 5, during data relay transmission, a transmitter (also called a source STA, S-STA) transmits the relay data frame (such as PPDU-1) to a relay (also called a relay STA, R-STA) through a relay link. After the relay fills the relay data frame with a necessary address for, the relay forwards the relay data frame (such as PPDU-2) to a receiver (also called a destination STA, D-STA). In addition, the transmitter may also transmit the data frame to the receiver through a direct link. In the embodiments of the present disclosure, the relay may also be an AP. For the sake of clarity, in the following description, the STA is used as the relay, which does not limit the embodiments of the present disclosure.

In the embodiments of the present disclosure, the source STA sends a first radio frame to a relay STA in a first link to instruct the relay STA to send a second radio frame to a receiver in a second link. That is to say, after receiving the first radio frame, the relay STA sends the second radio frame in another link. Here, the first radio frame and the second radio frame may be respectively relay data frames (such as relay PPDU), for example, the PPDU in FIG. 5; or may be radio frames used to request transmission of the relay data frame, such as a request to send (RTS) frame.

Specifically, taking the case where both the first radio frame and the second radio frame are RTS frames as an example, the source STA sends a first RTS frame (i.e., the first radio frame) to the relay STA in the first link so as to request the transmission of the relay data frame to the relay STA. After the relay STA receives the first RTS frame in the first link, the relay STA simultaneously sends a second RTS frame (i.e., the second radio frame) in another link (i.e., the second link). Thus, when the relay STA receives the data frame sent by the source STA, the relay STA transmits the relay data frame in another link without requiring a contention access channel for transmitting the relay data frame, thereby avoiding potential conflicts that may arise from the contention access channel and cause transmission delay.

Similarly, in a case that both the first radio frame and the second radio frame are relay data frames, when the relay STA receives the relay data frame sent by the source STA, the relay STA transmits the relay data frame in another link without requiring a contention access channel for transmitting the relay data frame.

In the embodiment of the present disclosure, the destination STA receives a second radio frame sent by a relay STA in a second link, in which the second radio frame is sent by the relay STA in response to receiving a first radio frame in a first link; the source STA sends the first radio frame to the relay STA in the first link, and simultaneously the relay STA sends the second radio frame to a receiver in the second link, so that there is no need for the relay STA to transmit the relay data frame based on a contention access channel, thereby avoiding potential conflicts that may arise from the contention access channel and may cause transmission delay. The embodiments of the present disclosure provide an implementation method for data relay to meet the transmission requirements for UHR.

Refer to FIG. 8, based on the same principle as the method provided by the embodiments of the present disclosure, an embodiment of the present disclosure also provides an electronic device. The electronic device is a relay and includes the following modules.

A first receiving module 801, is configured to receive a first radio frame from a transmitter in a first link.

A first sending module 802, is configured to send a second radio frame to a receiver in a second link in response to the first radio frame.

The first radio frame and/or the second radio frame requests to send a relay data frame, or the first radio frame and/or the second radio frame includes the relay data frame.

Optionally, the first radio frame includes a first RTS frame and the second radio frame includes a second RTS frame.

Optionally, the electronic device further includes the following modules.

A clear to send (CTS) sending module, is configured to send a CTS frame to the transmitter in the first link.

Optionally, the first RTS frame and/or the second RTS frame includes duration information.

The duration information includes the sum of a transmission duration of the relay PPDU, a duration of a short interframe space (SIFS), and a duration of an acknowledge character or block ACK (ACK/BA).

Optionally, the first RTS frame includes source address (SA) information of the transmitter and destination address (DA) information of the receiver.

Optionally, the transmitter supports multi-link communication, and the SA information includes medium access control (MAC) layer address information of a multi-link device corresponding to the transmitter;
and/or,
the receiver supports multi-link communication, and the DA information comprises MAC layer address information of a multi-link device corresponding to the receiver.

Optionally, the second RTS frame includes: receiver address (RA) information of the receiver in the second link, and transmitter address (TA) information of the transmitter in the second link.

Optionally, the first link and the second link form a simultaneous transmitting and receiving (STR) link pair with each other.

An embodiment of the present disclosure provides an apparatus for transmitting a radio frame. The apparatus is applied to a relay, and includes the following modules.

A first radio frame receiving module, is configured to receive a first radio frame from a transmitter in a first link.

A first radio frame sending module, is configured to send a second radio frame to a receiver in a second link in response to the first radio frame.

The first radio frame and/or the second radio frame requests to send a relay data frame, or the first radio frame and/or the second radio frame includes the relay data frame.

The apparatus also includes other modules of the electronic device as mentioned in the aforementioned embodiments, which will not be elaborated here.

Refer to FIG. 9, based on the same principle as the method provided by the embodiments of the present disclosure, an embodiment of the present disclosure also provides an electronic device. The electronic device is a transmitter and includes the following modules.

A second sending module 901, is configured to send a first radio frame to a relay in a first link to instruct the relay to send a second radio frame to a receiver in a second link.

The first radio frame and/or the second radio frame requests to send a relay data frame, or the first radio frame and/or the second radio frame includes the relay data frame.

Optionally, the first radio frame includes a first request to send (RTS) frame, and the second radio frame includes a second RTS frame.

Optionally, the electronic device further includes the following modules.

A clear to send (CTS) receiving module, is configured to receive a CTS frame sent by the relay in the first link.

Optionally, the first RTS frame and/or the second RTS frame includes duration information.

The duration information includes the sum of a transmission duration of the relay PPDU, a duration of a short interframe space (SIFS), and a duration of an acknowledge character or block ACK (ACK/BA).

Optionally, the first RTS frame includes source address (SA) information of the transmitter and destination address (DA) information of the receiver.

Optionally, the transmitter supports multi-link communication, and the SA information includes medium access control (MAC) layer address information of a multi-link device corresponding to the transmitter;
and/or,
the receiver supports multi-link communication, and the DA information comprises MAC layer address information of a multi-link device corresponding to the receiver.

Optionally, the second RTS frame includes: receiver address (RA) information of the receiver in the second link, and transmitter address (TA) information of the transmitter in the second link.

Optionally, the first link and the second link form a simultaneous transmitting and receiving (STR) link pair with each other.

An embodiment of the present disclosure provides an apparatus for transmitting a radio frame. The apparatus is applied to a relay, and includes the following modules.

A second radio frame sending module, is configured to send a first radio frame to a relay in a first link to instruct the relay to send a second radio frame to a receiver in a second link.

The first radio frame and/or the second radio frame requests to send a relay data frame, or the first radio frame and/or the second radio frame includes the relay data frame.

The apparatus also includes other modules of the electronic device as mentioned in the aforementioned embodiments, which will not be elaborated here.

Refer to FIG. 10, based on the same principle as the method provided by the embodiments of the present disclosure, an embodiment of the present disclosure also provides an electronic device. The electronic device is a relay and includes the following modules.

A second receiving module 1001, is configured to receive a second radio frame sent by a relay in a second link; in which the second radio frame is sent by the relay in response to receiving a first radio frame in a first link.

The first radio frame and/or the second radio frame requests to send a relay data frame, or the first radio frame and/or the second radio frame includes the relay data frame.

The embodiment of the present disclosure provides an apparatus for transmitting a radio frame. The device is applied to a relay, and includes the following modules.

A second radio frame receiving module, is configured to receive a second radio frame sent by a relay in a second link; in which the second radio frame is sent by the relay in response to receiving a first radio frame in a first link.

The first radio frame and/or the second radio frame requests to send a relay data frame, or the first radio frame and/or the second radio frame includes the relay data frame.

The apparatus also includes other modules of the electronic device as mentioned in the aforementioned embodiments, which will not be elaborated here.

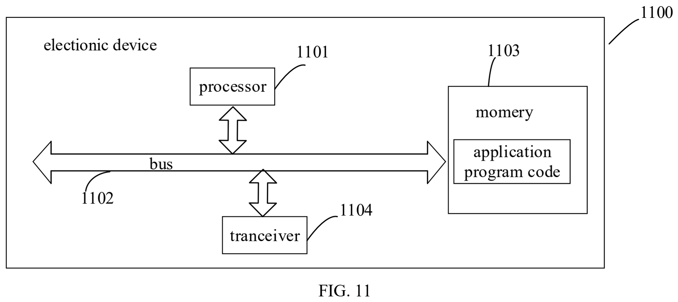

In an optional embodiment, the present disclosure also provides an electronic device. As shown in FIG. 11, the electronic device 1100 shown in FIG. 11 may be a server and includes: a processor 1101 and a memory 1103. The processor 1101 and the memory 1103 are connected, such as through a bus 1102. Optionally, the electronic device 1100 may also include a transceiver 1104. It should be noted that in actual applications, the number of transceivers 1104 is not limited to one, and the structure of the electronic device 1100 does not constitute a limitation to the present disclosure.

The processor 1101 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 1101 may be used for implementing or executing various logic blocks, modules, and circuits described in conjunction with the present disclosure. The processor 1101 may also be a combination that implements computing functions, such as a combination of one or more microprocessors, a combination of a DSP and a microprocessor, etc.

The bus 1102 may include a path for transmitting information among the aforementioned components. The bus 1102 may be a peripheral component interconnect (PCI) bus or an extended industry standard architecture (EISA) bus, etc. The bus 1102 may be classified into an address bus, a data bus, a control bus, etc. For ease of representation, only a thick line is used in FIG. 11 to represent the bus, but it does not imply that there is only one bus or only one type of buses.

The memory 1103 may be a read only memory (ROM) or other types of static storage devices that may store static information and instructions, a random access memory (RAM) or other types of dynamic storage devices that may store information and instructions, an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store program codes in the form of instructions or data structures and may be accessed by a computer, but is not limited to this.

The memory 1103 is used to store the application program code for implementing the technical solution of the present disclosure, and is controlled to execute by the processor 1101. The processor 1101 is used to execute the application program code stored in memory 1103 to achieve the content as described in the aforementioned method embodiments.

The electronic device includes but is not limited to: a mobile terminal such as a mobile phone, a laptop, a digital radio receiver, a personal digital assistant (PDA), a tablet computer (PAD), a portable multimedia player (PMP), or a mobile terminal (such as an in-vehicle navigation terminal), etc., as well as a fixed terminal such as a digital TV, or a desktop computer, etc. The electronic device shown in FIG. 11 is merely an example and should not impose any limitations on the functions and usage scope of the present disclosure.

The server provided by the present disclosure may be an independent physical server, a server cluster composed of a plurality of physical servers, or a distributed system. It may also be a cloud server that provides basic cloud computing services such as a cloud service, a cloud database, cloud computing, a cloud function, cloud storage, a network service, cloud communication, a middleware service, a domain name service, a security service, CDN, and big data and an artificial intelligence platform. The terminal may be a smart phone, a tablet computer, a laptop computer, a desktop computer, a smart speaker, a smart watch, etc., but is not limited to these. The terminal and the server may be directly or indirectly connected through wired or wireless communication, which is not limited in the present disclosure.

The embodiments of the present disclosure provide a computer-readable storage medium, on which a computer program is stored. When the computer program is run on a computer, the computer is caused to execute the corresponding contents of the aforementioned method embodiments.

It should be understood that although the steps in the flowchart of the attached figures are displayed sequentially according to the arrows, these steps are not necessarily executed in the order indicated by the arrows. Unless explicitly stated in the disclosure, there is no strict sequence restriction on the execution of these steps, and they may be executed in other orders. Moreover, at least some of the steps in the flowchart of the attached figure may include multiple sub-steps or multiple stages. These sub-steps or stages do not necessarily need to be completed at the same time, but may be executed at different times, and their execution order does not necessarily proceed sequentially, but may be executed alternately or in rotation with at least some other steps or sub-steps or stages of other steps.

It should be noted that the computer-readable medium mentioned above in the disclosure may be a computer-readable signal medium, or a computer-readable storage medium, or any combination of the two. The machine-readable media may be such as, but are not limited to, electronic, magnetic, optical, electromagnetic, infrared, or semiconductor systems, apparatuses or devices, or any suitable combination thereof. More specific examples of machine-readable storage media may include electrical links based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof. In the disclosure, the computer-readable storage medium may be any tangible medium that contains or stores a program, which may be executed by an instruction-executing system, device or component, or used in combination with it. In the disclosure, the computer-readable signal medium may include data signals carried in a baseband or as part of a carrier, where the data signals carry computer-readable program code. Such propagated data signals may take various forms, including but not limited to electromagnetic signals, optical signals, or any suitable combination of the above. The computer-readable signal medium may also be any computer-readable medium other than a computer-readable storage medium, and the computer-readable signal medium may send, propagate or transmit a program for use by an instruction-executing system, device or component or in combination with it. The program code contained in the computer-readable medium may be transmitted using any appropriate medium, including but not limited to: wires, optical cables, RF (radio frequency), etc., or any suitable combination of the above.

The above computer-readable medium may be contained within the above electronic device, or may exist independently and not be assembled into the electronic device.

The above computer-readable medium carries one or more programs. When these one or more programs are executed by the electronic device, the electronic device performs the method as described in the above embodiment.

According to one aspect of the present disclosure, a computer program product or a computer program is provided. The computer program product or the computer program includes a computer instruction, which is stored in the computer-readable storage medium. A processor of a computer device reads the computer instruction from the computer-readable storage medium, and the processor executes the computer instruction, thereby enabling the computer device to perform the methods provided in the various optional embodiments mentioned above.

Program codes configured to implement the methods in the present disclosure may be written in one or multiple programming languages, or any combination thereof. The programming languages include object-oriented programming languages such as Java, Smalltalk, C++, as well as conventional procedural programming languages such as "C" language or similar programming languages. The program codes may be executed entirely on a user computer, partially on a user computer, partially on a user computer and partially on a remote computer as a stand-alone software package, or entirely on a remote computer or a server. In a case that involving remote computers, the remote computer may be connected to the user computer through any type of networks, including local area networks (LANs) or wide area networks (WANs); or the remote computer may be connected to an external computer (for example, via the Internet by using an Internet service provider).

The flowcharts and block diagrams in the attached figures illustrate the possible architectures, functions and operations of the systems, methods and computer program products according to various embodiments of the present disclosure. In this regard, each box in the flowchart or block diagram may represent a module, a program segment, or a part of the code, which contains one or more executable instructions for implementing the specified logical functions. It should also be noted that in some alternative implementations, the functions indicated in the boxes may occur in a different order than that indicated in the figures. For example, two consecutive boxes may actually be executed in a basically parallel manner, and they may sometimes be executed in the opposite order, depending on the functions involved. It should also be noted that each box in the block diagram and/or flowchart, as well as the combinations of boxes in the block diagram and/or flowchart, may be implemented using a dedicated hardware-based system that performs the specified functions or operations, or using a combination of dedicated hardware and computer instructions.

The modules described in the present disclosure may be realized in a software manner or in a hardware manner. In some cases, the name of a module does not limit the module itself. For example, module A may also be described as "module A for performing operation B".

The above description merely shows some embodiments of the present disclosure and an explanation of the technical principles. Those skilled in the art should understand that the scope of the disclosure herein is not limited to the technical solution formed by a specific combination of the aforementioned technical features, but also encompasses other technical solutions formed by any combination of the aforementioned technical features or their equivalents, without departing from the aforementioned disclosure concept. For example, such technical solutions may be formed by replacing the aforementioned features with the (but not limited to) technical features having similar functions disclosed in the present disclosure.

## Claims

1. A method for transmitting a radio frame, performed by a relay, comprising:
receiving a first radio frame from a transmitter in a first link;
sending a second radio frame to a receiver in a second link in response to the first radio frame;
wherein the first radio frame and/or the second radio frame requests to send a relay data frame, or the first radio frame and/or the second radio frame comprises the relay data frame.

2. The method for transmitting a radio frame according to claim 1, wherein the first radio frame comprises a first request to send (RTS) frame, and the second radio frame comprises a second RTS frame.

3. The method for transmitting a radio frame according to claim 2, wherein after receiving the first radio frame from the transmitter in the first link, the method further comprises:
sending a clear to send (CTS) frame to the transmitter in the first link.

4. The method for transmitting a radio frame according to claim 2, wherein the first RTS frame and/or the second RTS frame comprises duration information;
wherein the duration information comprises the sum of a transmission duration of the relay data frame, a duration of a short interframe space (SIFS), and a duration of an acknowledge character or block ACK (ACK/BA).

5. The method for transmitting a radio frame according to claim 2, wherein the first RTS frame comprises source address (SA) information of the transmitter and destination address (DA) information of the receiver.

6. The method for transmitting a radio frame according to claim 5, wherein the transmitter supports multi-link communication, and the SA information comprises medium access control (MAC) layer address information of a multi-link device corresponding to the transmitter;
and/or,
the receiver supports multi-link communication, and the DA information comprises MAC layer address information of a multi-link device corresponding to the receiver.

7. The method for transmitting a radio frame according to claim 2, wherein the second RTS frame comprises: receiver address (RA) information of the receiver in the second link, and transmitter address (TA) information of the transmitter in the second link.

8. The method for transmitting a radio frame according to any one of claims 1-7, wherein the first link and the second link form a simultaneous transmitting and receiving (STR) link pair with each other.

9. A method for transmitting a radio frame, performed by a transmitter, comprising:
sending a first radio frame to a relay in a first link to instruct the relay to send a second radio frame to a receiver in a second link;
wherein the first radio frame and/or the second radio frame requests to send a relay data frame, or the first radio frame and/or the second radio frame comprises the relay data frame.

10. The method for transmitting a radio frame according to claim 9, wherein the first radio frame comprises a first request to send (RTS) frame, and the second radio frame comprises a second RTS frame.

11. The method for transmitting a radio frame according to claim 10, wherein after sending the first radio frame to the relay in the first link, the method further comprises:
receiving a clear to send (CTS) frame sent by the relay in the first link.

12. The method for transmitting a radio frame according to claim 10, wherein the first RTS frame and/or the second RTS frame comprises duration information;
wherein the duration information comprises the sum of a transmission duration of the relay data frame, a duration of a short interframe space (SIFS), and a duration of an acknowledge character or block ACK (ACK/BA).

13. The method for transmitting a radio frame according to claim 10, wherein the first RTS frame comprises source address (SA) information of the transmitter and destination address (DA) information of the receiver.

14. The method for transmitting a radio frame according to claim 13, wherein the transmitter supports multi-link communication, and the SA information comprises medium access control (MAC) layer address information of a multi-link device corresponding to the transmitter;
and/or,
the receiver supports multi-link communication, and the DA information comprises MAC layer address information of a multi-link device corresponding to the receiver.

15. The method for transmitting a radio frame according to claim 10, wherein the second RTS frame comprises: receiver address (RA) information of the receiver in the second link, and transmitter address (TA) information of the transmitter in the second link.

16. The method for transmitting a radio frame according to any one of claims 9-15, wherein the first link and the second link form a simultaneous transmitting and receiving (STR) link pair with each other.

17. A method for transmitting a radio frame, performed by a receiver, comprising:
receiving a second radio frame sent by a relay in a second link; wherein the second radio frame is sent by the relay in response to receiving a first radio frame in a first link;
wherein the first radio frame and/or the second radio frame requests to send a relay data frame, or the first radio frame and/or the second radio frame comprises the relay data frame.

18. An electronic device, wherein the electronic device is a relay and comprises:
a first receiving module, configured to receive a first radio frame from a transmitter in a first link;
a first sending module, configured to send a second radio frame to a receiver in a second link in response to the first radio frame;
wherein the first radio frame and/or the second radio frame requests to send a relay data frame, or the first radio frame and/or the second radio frame comprises the relay data frame.

19. An electronic device, wherein the electronic device is a transmitter and comprises:
a second sending module, configured to send a first radio frame to a relay in a first link to instruct the relay to send a second radio frame to a receiver in a second link;
wherein the first radio frame and/or the second radio frame requests to send a relay data frame, or the first radio frame and/or the second radio frame comprises the relay data frame.

20. An electronic device, wherein the electronic device is a receiver and comprises:
a second receiving module, configured to receive a second radio frame sent by a relay in a second link; wherein the second radio frame is sent by the relay in response to receiving a first radio frame in a first link;
wherein the first radio frame and/or the second radio frame requests to send a relay data frame, or the first radio frame and/or the second radio frame comprises the relay data frame.

21. An electronic device, comprising a memory, a processor, and a computer program stored on the memory and runnable on the processor, wherein the processor executes the computer program to perform the method according to any one of claims 1-8, 9-16 or 17.

22. A computer-readable storage medium, wherein a computer program is stored on the computer-readable storage medium, and when the computer program is executed by a processor, the method according to any one of claims 1-8, 9-16 or 17 is implemented.
